# EUROPÄISCHE PATENTSCHRIFT

(11) **EP 2 177 343 B1**
(45) Veröffentlichungstag und Bekanntmachung des Hinweises auf die Patenterteilung: **25.12.2013**
(21) Anmeldenummer: 08020151.0
(22) Anmeldetag: 19.11.2008
(51) Int. Cl.: B29C 65/42

(54) **Verbundprofil**
Composite profile
Profil composite

(30) Priorität: 16.10.2008 EP 08018144
(43) Veröffentlichungstag der Anmeldung: 21.04.2010
(73) Patentinhaber: RK Protec GmbH, 32825 Blomberg (DE)
(72) Erfinder: Richter, Nikolaus, 14793 Ziesar (DE)
(74) Vertreter: Holland, Ralf

(56) Entgegenhaltungen:
- EP-A- 0 015 536
- EP-A- 0 018 612
- EP-A- 1 925 417
- DE-A1- 10 008 465

## Beschreibung

Die Erfindung betrifft ein Herstellungsverfahren für ein Verbundprofil mit zwei durch einen Isolierkörper verbundenen Einzelprofilen und das derart hergestellte Verbundprofil selbst.

Verbundprofile werden vielfältig eingesetzt und sind in zahlreichen Varianten bekannt und bewährt.

In der DE 100 08 465 A1 wird die Herstellung solcher Profile erläutert. Es weisen die aus der DE 100 08 465 A1 bekannten Verbundprofile zwei gegenüberliegende, in einem Querschnitt U-förmige Aufnahmen auf, in denen der Isolierkörper eingebracht wird. Die Anordnung und das Herstellverfahren bedingen jedoch verlorene Schalelemente, die mit dem Verbundprofil nach Einbringen des Isolierkörpers eine Einheit ausbilden und den Isolierkörper und das Profil nach außen abschließen. Ist das Schalelement von einfacher Geometrie, kann jedoch keine durchgängige, ebenen Außenseite ausgebildet werden.

Das Herstellungsverfahren ist durch das Einbringen des verlorenen Schalelements aufwändig und teuer. Insbesondere ist es auch bei Verbundprofilen kleiner Abmessungen nicht unproblematisch, da das das Verbundprofil nach außen abschließende Schalelement ebenso wie die Einzelprofile zueinander sehr exakt zu positionieren und für das Einbringen der flüssigen Phase des Isolierkörpers festzulegen sind.

Als ein weiterer Nachteil des bekannten Verbundprofils ist die geringe Auszugssicherheit des Isolierkörpers anzusehen, der im Wesentlichen mit den U-förmigen Taschen der Einzelprofile lediglich durch Klebeflächen verbunden ist. Entsprechend empfindlich sind die bekannten Profile daher auch gegenüber größeren Scherkräften.

Vor diesem technischen Hintergrund macht die Erfindung es sich zur Aufgabe, ein Herstellungsverfahren für ein Verbundprofil der in Rede stehenden Art zur Verfügung zu stellen, das in einfacher Weise eine auszugssichere Verbindung der Einzelprofile und eine glatte Ausbildung einer Außenseite des Verbundprofils durch den Isolierkörper gewährleistet.

Gelöst wird diese technische Problematik bei einem Herstellungsverfahren für ein Verbundprofil, aufweisend zwei durch einen in einer flüssigen Phase aufgebrachten und anschließend ausgehärteten Isolierkörper verbundene Einzelprofile, gemäß des Anspruchs 1 durch die Maßnahmen, dass zwei Einzelprofile gegen einen Formkörper maßgenau verspannt werden, dass von außerhalb des Verbundprofils ein Aufbringen der flüssigen Phase gegen den Formkörper erfolgt, dass der Isolierkörper ausgehärtet bündig in einer Ebene mit einer Außenseite des Verbundprofils diese mit ausbildend die Einzelprofile verbindet, wobei der Isolierkörper mit wenigstens einem Einzelprofil durch eine Hinterschneidung auszugssicher verbunden ist.

Das erfindungsgemäße Verfahren bietet eine Vielzahl von Vorteilen. So wird zunächst eine exakte Ausrichtung der beiden Einzelprofile zueinander sichergestellt, da die beiden Einzelprofile in Anlage an einen Formkörper positioniert werden. Bei einer geeigneten Geometrie erfolgt die exakte Ausrichtung der Einzelprofile zueinander durch Anlage an Kanten, Ecken oder dergleichen darüber hinaus gleichsam von selbst.

Durch die Maßnahme, dass die Einzelprofile von außen gegen den innen liegenden Formkörper verspannt werden, ist ein einfaches Handling eines solchen Paketes aus zwei einen Formkörper einfassenden Einzelprofilen ermöglicht, da ein Verschieben der Einzelprofile vor oder während eines Spritzvorgangs, bei dem die flüssige Phase des Isolierkörpers aufgebracht wird, nahezu ausgeschlossen ist. Insbesondere ist es auch möglich, mehrere solcher Pakete von Verbundprofilen nebeneinander liegend bspw. einem Spritzvorgang zuzuführen, wobei die Pakete untereinander und jeweils zwei Einzelprofile gegen einen innen liegenden Formkörper verspannt sind.

Nach der Erfindung härtet der Isolierkörper selbst bündig und in einer Ebene mit einer Außenseite des Verbundprofils aus und verbindet die Einzelprofile unter Mitausbildung der Außenseite. Hierbei soll außer betracht bleiben, dass nach einem Spritzvorgang und nach einem Aushärten in einem gewissen Umfang Deformationen der die Außenseite mit ausbildenden Oberfläche des Isolierkörpers auftreten können, bspw. ein etwa mittiges Absenken der Oberfläche. Gegebenenfalls kann in einem nachfolgenden Verfahrensschritt noch vorgesehen werden, die ansonsten glatte Außenseite von überschüssigem Material der flüssigen Phase abzureinigen, womit einhergehend bspw. eine für eine Pulverbeschichtung erforderliche Oberflächenbearbeitung der Einzelprofile noch erfolgen kann.

Ein sehr hohes Maß an Stabilität erhält das erfindungsgemäß hergestellte Verbundprofil ferner durch die Maßnahme, dass der Isolierkörper wenigstens eine Hinterschneidung mit einem Einzelprofil ausbildet. Über ein reines Verhaften des in einer flüssigen Phase aufgebrachten Isolierkörpers hinaus wird somit durch den Isolierkörper eine mechanische Verbindung zwischen den Einzelprofilen hergestellt, die zerstörungsfrei nicht lösbar ist.

In weiterer Ausgestaltung des Verfahrens nach der Erfindung ist vorgesehen, dass das Aufbringen der flüssigen Phase gegen einen den Profilquerschnitt füllenden Formkörper erfolgt, dass der anschließend ausgehärtete Isolierkörper bündig und in einer Ebene mit wenigstens einer Außenseite zweier Schenkel der Einzelprofile liegend diese verbindet, insbesondere in einer Ebene mit den beiden Außenseiten der aufeinander zu gerichteten zwei Schenkel, ferner, dass der Isolierkörper unterseitig der Schenkel anhaftet und dass eine durch wenigstens ein Einzelprofil ausgebildete Abkantung von dem Isolierkörper hintergriffen wird.

Die Geometrie des Verbundprofils ist damit weitgehend frei gestaltbar, insbesondere sind nahezu beliebige, jedoch vorzugsweise winklige Querschnitte ermöglicht. Durch das unterseitige Verhaften des Isolierkörpers an den Schenkeln und durch die Hinterschneidung durch das Hintergreifen der Abkantung wird dabei ein Höchstmaß an mechanischer Stabilität erreicht, die unabhängig von dem äußeren Querschnitt des Verbundprofils ist.

Es kann vorgesehen sein, dass der Formkörper nach Aushärten des Isolierkörpers in dem Verbundprofil verbleibt. Es wird dann der Formkörper als Teil des Verbundprofils gleichfalls thermisch isolierende Eigenschaften aufweisen und vorzugsweise aus einem Schaumkunststoff bestehen.

Alternativ besteht die Möglichkeit, dass die räumliche Anordnung der Einzelprofile zueinander eine Öffnung für den Formkörper belässt und dass der in das Verbundprofil eingebrachte Formkörper mit oder nach Aushärten des Isolierkörpers entfernt wird, nämlich zu einem Zeitpunkt, an dem das Verbundprofil durch den die Einzelprofile verbindenden Isolierkörper eine ausreichende Stabilität aufweist.

Ist vorgesehen, dass der Formkörper bei dem Aufbringen der flüssigen Phase des Isolierkörpers den Raum zwischen zwei Abwinklungen der aufeinander zu gerichteten Schenkel ausfüllt, ist eine schnelle, dennoch exakte Positionierung und ein einfaches Verspannen der Einzelprofile gegeneinander gewährleistet.

Diese Vorteile werden weiter optimiert, wenn vorgesehen ist, dass der Formkörper bei dem Aufbringen der flüssigen Phase des Isolierkörpers in einer unterseitigen Anlage an wenigstens einer Abkantung befindlich ist.

Es kann insbesondere durch das voran stehend erläuterte Verfahren ein Verbundprofil mit zwei durch einen Isolierkörper verbundenen Einzelprofilen hergestellt werden, bei dem der in flüssiger Phase aufgebrachte und anschließend ausgehärtete Isolierkörper in einer Ebene mit einer Außenseite des Verbundprofils liegend und diese mit ausbildend die Einzelprofile verbindet und dass der Isolierkörper (8,9) mit wenigstens einem Einzelprofil durch eine Hinterschneidung auszugssicher verbunden ist.

Das Verbundprofil nach der Erfindung weist keine verlorene Schalung auf, die in dem Verbundprofil verbleibt. Vielmehr wird eine glatte Außenseite des Verbundprofils unmittelbar durch den Isolierkörper selbst mit ausgebildet, der so mit einer profiläußeren Seite mit der Außenseite des Verbundprofils in einer Ebene liegt. Ferner ist ein derartiges Verbundprofil von hoher mechanischer Stabilität, da ein zerstörungsfreies Versagen des Isolierkörpers durch die ausgebildete Hinterschneidung ausgeschlossen ist.

Es kann vorgesehen sein, dass der in flüssiger Phase aufgebrachte und anschließend ausgehärtete Isolierkörper in einer Ebene mit wenigstens einer Außenseite zweier Schenkel des Verbundprofils liegt, diese mit ausbildend die Einzelprofile verbindet und dass der Isolierkörper mit wenigstens einer Hinterschneidung ein Einzelprofil hintergreifend ausgebildet ist.

Insbesondere sind als weitere Maßnahmen vorgesehen, dass der Isolierkörper in einer Ebene mit den Außenseiten zweier aufeinander zu gerichteten Schenkel der Einzelprofile liegend diese verbindet, dass der Isolierkörper unterseitig der Schenkel anhaftet und dass eine durch wenigstens ein Einzelprofil ausgebildete Abkantung von dem Isolierkörper hintergriffen wird.

Es schließt der Isolierkörper bündig, in einer Ebene mit den Außenseiten der aufeinander zu gerichteten Schenkel ab und bildet damit eine Außenseite des Verbundprofils mit aus. Darüber hinaus verhaftet der Isolierkörper großflächig an den Unterseiten der aufeinander zu gerichteten Schenkel.

Insbesondere wird eine Auszugssicherheit des Isolierkörpers und damit die mechanische Stabilität des Verbundprofils nach der Erfindung insgesamt durch die Maßnahme sichergestellt, dass von dem Isolierkörper wenigstens eine Abkantung hintergriffen wird, die durch ein Einzelprofil ausgebildet wird, vorzugsweise zwei gegenüberliegende Abkantungen jeweils eines Einzelprofils. Damit ist ein Auszug nur unter Zerstörung des Isolierkörpers möglich.

Ebenfalls der Erhöhung der Auszugssicherheit dient die Maßnahme, dass ein Schenkel Durchbrechungen aufweist, die von dem Isolierkörper durchsetzt werden.

Da der Isolierkörper in einer flüssigen Phase von außen aufgebracht wird, ist es zweckmäßig, wenn ein Rand einer von dem Isolierkörper hintergriffenen Abkantung mit Ausnehmungen, Kerben, Einschnitten und/oder mit randseitigen Verschränkungen versehen ist, so dass die flüssige Phase problemlos in den Bereich hinter einer solchen Abkantung gelangen kann und diese, nach Aushärten, auch sicher hintergreift und eine Hinterschneidung ausbildet.

Es kann weiter vorgesehen sein, dass ein Schenkel eine Abkantung aufweist, insbesondere dass beide aufeinander zu gerichteten Schenkel mit derartigen Abkantungen versehen sind, so dass das Profil und der Isolierkörper weitgehend symmetrisch ausgebildet sein können.

Bei einer Variante kann vorgesehen sein, dass ein Einzelprofil zweilagig ausgebildet ist und dass eine profilinnere Lage eine von dem Isolierkörper hintergriffene Abkantung aufweist. Hierdurch wird zunächst die mechanische Stabilität des Einzelprofils durch seine Zweilagigkeit erhöht. Ferner wird die profilinnere Lage die Abkantung aufweisen, die dann derart abgewinkelt sein kann, dass eine optimale Sicherheit gegen einen Auszug des Isolierkörpers gewährleistet ist.

In weiterer Ausgestaltung des Verbundprofils nach der Erfindung ist vorgesehen, dass die aufeinander zu gerichteten Schenkel mit äußeren Abwinklungen versehen sind und dass der Isolierkörper sich über die gesamte Länge der aufeinander zu gerichteten Schenkel von Abwinklung zu Abwinklung erstreckt. Ein großflächiges Verhaften des Isolierkörpers an den Unterseiten der aufeinander zu gerichteten Schenkel ist damit gewährleistet.

In weiterer konstruktiver Ausgestaltung kann vorgesehen sein, dass ein Schenkel und eine Abwinklung einen rechten Winkel aufspannen. Dabei können Abrundungen oder Abflachungen der Ecke außer Betracht gelassen werden. Es kann dann das Verbundprofil einen rechteckigen Querschnitt aufweisen und symmetrisch zu einer oder den beiden Symmetrielinien eines solchen Rechtecks ausgebildet sein.

In weiterer Ausgestaltung des Verbundprofils nach der Erfindung ist vorgesehen, dass dieses einen inneren Formkörper aus einem Schaumkunststoff aufweist, auf dem ein Isolierkörper aufsitzt. Insbesondere kann ein solcher Formkörper bei der Herstellung auch als Werkzeug mit herangezogen worden sein, wenn gegen dieses die flüssige Phase des Isolierkörpers aufgebracht wurde.

Das Verbundprofil nach der Erfindung und seine Herstellung werden anhand der Zeichnung näher erläutert, in der lediglich Ausführungsbeispiele schematisch und nicht maßstabsgerecht dargestellt sind. In der Zeichnung zeigt:
- Fig. 1:: einen Querschnitt durch ein erstes Ausführungsbeispiel,
- Fig. 2:: die Einzelprofile des Verbundprofils nach Figur 1,
- Fig. 3:: einen Querschnitt durch ein zweites Ausführungsbeispiel,
- Fig. 4:: die Einzelprofile des Verbundprofils nach Figur 3,
- Fig. 5:: eine ausschnittsweise Ansicht einer Abkantung mit Ausnehmungen,
- Fig. 6:: einen Querschnitt durch ein drittes Ausführungsbeispiel eines Verbundprofils,
- Fig. 7:: die Einzelprofile des Verbundprofils nach Figur 6,
- Fig. 8:: einen Querschnitt durch ein viertes Ausführungsbeispiel eines Verbundprofils und
- Fig. 9:: die Einzelprofile des Verbundprofils nach Figur 8.

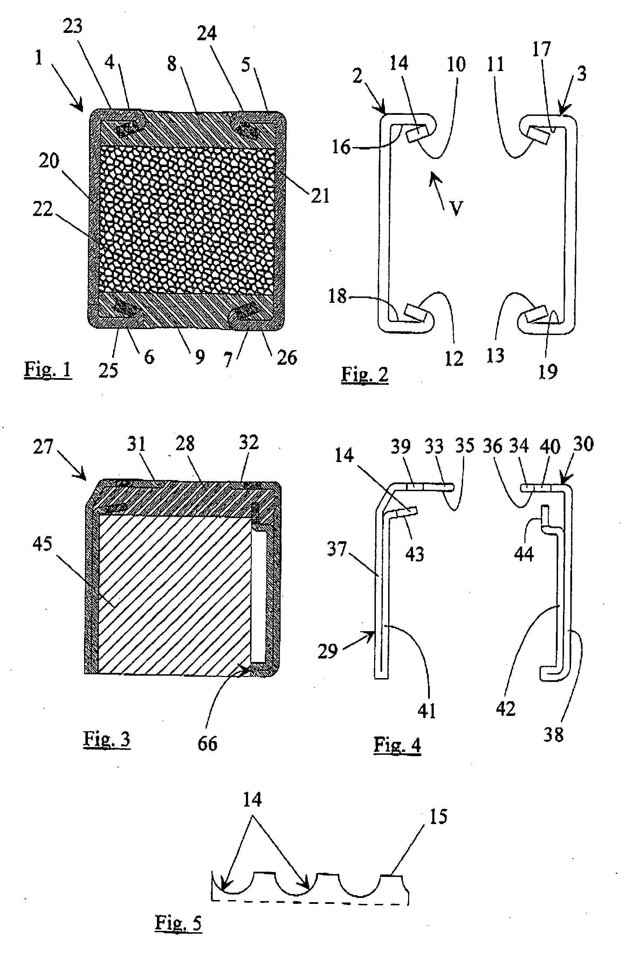

Das in Figur 1 in einem Querschnitt dargestellte Verbundprofil 1 von im wesentlichen rechteckigen Querschnitt weist zwei Einzelprofile 2,3 gemäß Figur 2 auf. Die Einzelprofile 2,3 sind gleichartig ausgebildet und jeweils etwa U-förmig gebogen. Die aufeinander zugerichteten Schenkel 4,5; 6,7 sind jeweils durch einen Isolierkörper 8,9 verbunden, beispielsweise aus einem Polyurethan, das in einer flüssigen Phase aufgebracht und anschließend ausgehärtet die Schenkel 4,5; 6,7 verbindet.

Die Schenkel 4,5; 6,7 sind mit Abkantungen 10-13 versehen, die von den Isolierkörpern 8,9 hintergriffen werden, so dass die Verbindung der Einzelprofile 2,3 durch die Hinterschneidungen ausbildenden Isolierkörper 8,9 weitestgehend auszugssicher ist.

Die Abkantungen 10-13 weisen randseitige Ausnehmungen 14 auf, die bei dem Ausführungsbeispiel halbkreisförmig in einen Rand 15 einer Abkantung eingebracht sind, vergleiche Figur 5.

Derartige Ausnehmungen 14 in dem Rand 15 einer Abkantung 11 oder sonstige Durchbrechung, Kerben und/oder randseitige Verschränkungen erlauben es, dass bei dem Aufbringen der flüssigen Phase des Isolierkörpers von außerhalb des Verbundprofils 1 die Abkantungen 10-13 sicher hintergriffen werden und die Isolierkörper 8,9 vollständig an den Unterseiten 16,17; 18,19 anhaften und sich jeweils von einer die Schenkel 4,6 verbindenden Abwinklung 20 zu einer die Schenkel 5,7 verbindenden Abwinklung 21 erstrecken.

Das Verbundprofil 1 weist einen den Profilquerschnitt füllenden Formkörper 22 aus einem Schaumkunststoff auf, der gleichfalls einer thermischen Isolierung dient. Bei der Herstellung des Verbundprofils 1 werden die Einzelprofile 2,3 mit dem Formkörper 22 verspannt, gegebenenfalls mit den Abwinklungen 20,21 verhaftet, so dass das Aufbringen der flüssigen Phase der Isolierkörper 8,9 anschließend gegen diesen Formkörper 22 aus einem Schaumkunststoff erfolgt und die ausgehärteten Isolierkörper 8,9 bündig, in einer Ebene liegend, mit den Außenseiten 23-26 der Schenkel 4-7 abschließen können. Bei einer solchen Herstellungsweise verbleibt der Formkörper 22 nach Aushärten der Isolierkörper 8,9 innerhalb des Verbundprofils 1.

Auch wenn der Formkörper 22 bis an die Abkantungen 10-13 heranreicht, ist durch die Ausnehmungen 14 in den Abkantungen 10-13 sichergestellt, dass die in flüssiger Phase aufgebrachten Isolierkörper 8,9 Hinterschneidungen mit den Einzelprofilen 2,3 ausbilden.

Auch bei dem Verbundprofil 27 gem. Fig. 3 schließt der Isolierkörper 28 die Einzelprofile 29,30 gemäß Figur 4 verbindend in einer Ebene mit den Außenseiten 31,32 der aufeinander zugerichteten Schenkel 33,34 ab und erstreckt sich über die Unterseiten 35,36 der Schenkel 33,34 von einer Abwinklung 37 des Einzelprofils 29 hin zu einer Abwinklung 38 des Einzelprofils 30.

Die Einzelprofile 29,30 sind zweilagig ausgebildet, wobei jeweils eine innere Lage 41,42 eine von dem Isolierkörper 28 hintergriffene Abwinklung 43,44 aufweist, deren Ränder entsprechend Figur 5 ausgebildet sein können. Ferner können noch Durchbrechungen 39,40 in den Schenkeln 33,34 vorgesehen werden, in denen der Isolierkörper 28 gleichfalls verriegelt.

Ein Formkörper 45 dient der Herstellung des Verbundprofils 27. Hierzu ist die räumliche Anordnung der Einzelprofile 29,30 zueinander derart, dass eine Öffnung 66 für den Formkörper 45 verbleibt, durch die der in das Verbundprofil 27 eingebrachte Formkörper 45 mit oder nach Aushärten des flüssig aufgebrachten Isolierkörpers 28 entfernt wird. Eine exakte Positionierung der Einzelprofile 29,30 an dem Formkörpers 45 für das Einbringen des Isolierkörpers 28 wird zum einen durch die Öffnung 66 und zum anderen durch dessen unterseitige Anlage an der Abkantung 43 und der flachseitigen Anlage an der Abkantung 44 sichergestellt, womit man ein sehr maßgenaues Verbundprofil 27 erhält.

Weisen auch die beiden Verbundprofile 1,27 jeweils einen rechteckigen Außenquerschnitt auf, so ist das Verbundprofil 1 symmetrisch zu den Symmetrielinien eines Rechtsecks ausgebildet, während das Verbundprofil 27 unsymmetrisch aufgebaut ist. Abgerundete oder abgeflachte Ecken verbleiben dabei außer Betracht.

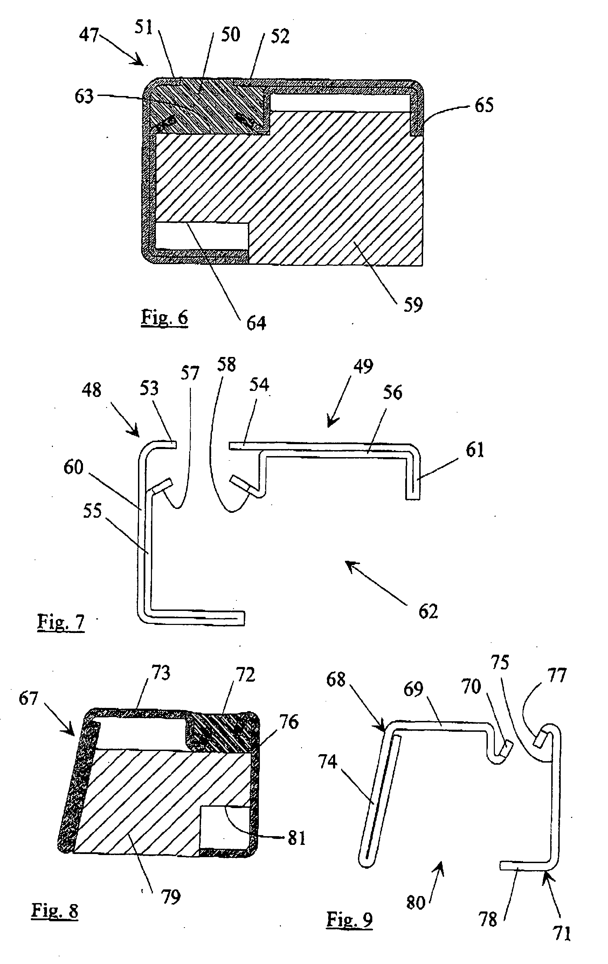

Anhand der Figuren 6 und 7 wird ein Verbundprofil 47 weiter erläutert. Figur 6 zeigt, dass der die Einzelprofile 48,49 verbindende Isolierkörper 50 wiederum bündig und in einer Ebene mit den Außenseiten 51,52 der aufeinander zu gerichteten Schenkel 53,54 abschließt.

Jeweils eine innere Lage 55,56 der doppellagig ausgebildeten Einzelprofile 48,49 sind mit von dem Isolierkörper 50 hintergriffenen Abkantungen 57,58 versehen, die wiederum Ausnehmungen 14 gemäß Figur 5 aufweisen können.

Entsprechend der Herstellung des Verbundprofils 27 wird auch bei dem Verbundprofil 47 ein Formkörper 59 dazu herangezogen, die Einzelprofile 48,49 exakt zueinander zu positionieren und anschließend das Einbringen des Isolierkörpers 50 in einer flüssigen Phase zu begrenzen. Dazu liegt der Formkörper 59 nicht nur unterseitig der beiden Abkantungen 57,58 an, sondern erstreckt sich zusätzlich zwischen einer Abwinklung 60 des Schenkels 53 und einer Abwinklung 61 des Schenkels 54. Damit der Formkörper 59 durch eine zwischen den Abwinklungen 60,61 verbleibende Öffnung 62 eingebracht bzw. wieder entfernt werden kann, ist der Formkörper 59 noch mit Ausnehmungen 63,64,65 versehen, die dessen Verschieben innerhalb des Verbundprofils 47 erlauben.

Letztlich zeigen die Figuren 8 und 9 ein viertes Ausführungsbeispiel eines Verbundprofils 67. Ein Einzelprofil 68 weist an einem Schenkel 69 eine Abkantung 70 auf, die von einem das Einzelprofil 68 mit einem weiteren Einzelprofil 71 verbindenden Isolierkörper 72 hintergriffen wird. Dieser Isolierkörper schließt das Verbundprofil 67 in einer Ebene mit einer Außenseite 73 des Schenkels 69 ab und bildet damit eine eben sich erstreckende Profilaußenseite mit aus.

Der Isolierkörper 72 erstreckt sich unterseitig des Schenkels 69 von einer an den Schenkel 69 anschließenden, zweilagigen Abwinklung 74, unter einem Winkel von bspw. 30° gegenüber einer Vertikalen, bis hin zu einer Unterseite 75 eines Schenkels 76 des Einzelprofils 71 unter Hintergreifen einer Abkantung 77. Auch der Schenkel 76 des einlagig ausgebildeten Einzelprofils 71 ist mit einer hier rechtwinkligen Abwinklung 78 versehen, so dass ein Formkörper 79 für sein Entfernen aus dem Verbundprofil 67 durch eine zwischen den Einzelprofilen 68,71 verbleibende Öffnung 80 nach Aushärten des in flüssiger Phase aufgebrachten Isolierkörpers 73 mit einer Ausnehmung 81 versehen ist, die ein Verschieben des Formkörpers 79 innerhalb des Verbundprofils 67 erlaubt, bis der Formkörper 79 bspw. auch durch Herausdrehen entfernt werden kann.

### Bezugszeichenliste:

- 1.: Verbundprofil
- 2.: Einzelprofil
- 3.: Einzelprofil
- 4.: Schenkel
- 5.: Schenkel
- 6.: Schenkel
- 7.: Schenkel
- 8.: Isolierkörper
- 9.: Isolierkörper
- 10.: Abkantung
- 11.: Abkantung
- 12.: Abkantung
- 13.: Abkantung
- 14.: Ausnehmung
- 15.: Rand
- 16.: Unterseite
- 17.: Unterseite
- 18.: Unterseite
- 19.: Unterseite
- 20.: Abwinklung
- 21.: Abwinklung
- 22.: Formkörper
- 23.: Außenseite
- 24.: Außenseite
- 25.: Außenseite
- 26.: Außenseite
- 27.: Verbundprofil
- 28.: Isolierkörper
- 29.: Einzelprofil
- 30.: Einzelprofil
- 31.: Außenseite
- 32.: Außenseite
- 33.: Schenkel
- 34.: Schenkel
- 35.: Unterseite
- 36.: Unterseite
- 37.: Abwinklung
- 38.: Abwinklung
- 39.: Durchbrechung
- 40.: Durchbrechung
- 41.: Lage
- 42.: Lage
- 43.: Abkantung
- 44.: Abkantung
- 45.: Formkörper
- 46.:
- 47.: Verbundprofil
- 48.: Einzelprofil
- 49.: Einzelprofil
- 50.: Isolierkörper
- 51.: Außenseite
- 52.: Außenseite
- 53.: Schenkel
- 54.: Schenkel
- 55.: Lage
- 56.: Lage
- 57.: Abkantung
- 58.: Abkantung
- 59.: Formkörper
- 60.: Abwinklung
- 61.: Abwinklung
- 62.: Öffnung
- 63.: Ausnehmung
- 64.: Ausnehmung
- 65.: Ausnehmung
- 66.: Öffnung
- 67.: Verbundprofil
- 68.: Einzelprofil
- 69.: Schenkel
- 70.: Abkantung
- 71.: Einzelprofil
- 72.: Isolierkörper
- 73.: Außenseite
- 74.: Abwinklung
- 75.: Unterseite
- 76.: Schenkel
- 77.: Abkantung
- 78.: Abwinklung
- 79.: Formkörper
- 80.: Öffnung
- 81.: Ausnehmung

## Patentansprüche

1. Verfahren für die Herstellung eines Verbundprofils, aufweisend zwei durch einen in einer flüssigen Phase aufgebrachten und anschließend ausgehärteten Isolierkörper verbundene Einzelprofile, **dadurch gekennzeichnet,**
- **dass** zwei Einzelprofile (2,3) gegen einen Formkörper (22) maßgenau verspannt werden,
- **dass** von außerhalb des verbundprofils (1) ein Aufbringen der flüssigen Phase gegen den Formkörper (22) erfolgt,
- **dass** der Isolierkörper (8,9) ausgehärtet bündig und in einer Eben mit einer Außenseite (23,24) des Verbundprofils (1) diese mit ausbildend die Einzelprofile (2,3) verbindet, wobei
- der Isolierkörper (8,9) mit wenigstens einem Einzelprofil (2,3) durch eine Hinterschneidung auszugssicher verbunden ist.

2. Verfahren nach Anspruch 1, **dadurch gekennzeichnet, dass** das Aufbringen der flüssigen Phase gegen einen den Profilquerschnitt füllenden Formkörper (22) erfolgt, dass der anschließend ausgehärtete Isolierkörper (8,9) bündig und in einer Eben mit wenigstens einer Außenseite (23,24;25,26) zweier Schenkel (4,5;6,7) der Einzelprofile (2,3) liegend diese verbindet, dass der Isolierkörper (8,9) unterseitig der Schenkel (4,5;6,7) anhaftet und dass eine durch wenigstens ein Einzelprofil (2,3) ausgebildete Abkantung (10,11;12,13) von dem Isolierkörper (8,9) hintergriffen wird.

3. Verfahren nach einem oder mehreren der vorangehenden Ansprüche, **dadurch gekennzeichnet, dass** der Formkörper (22) nach Aushärten des Isolierkörpers (8,9) in dem Verbundprofil (1) verbleibt.

4. Verfahren nach einem oder mehreren der Ansprüche 1 bis 2, **dadurch gekennzeichnet, dass** die räumliche Anordnung der Einzelprofile (29,30) zueinander eine Öffnung (66) für den Formkörper (45) belässt und dass der in das Verbundprofil (27) eingebrachte Formkörper (45) mit oder nach Aushärten des Isolierkörpers (28) entfernt wird.

5. Verfahren nach einem oder mehreren der vorangehenden Ansprüche, **dadurch gekennzeichnet, dass** der Formkörper (59) bei dem Aufbringen der flüssigen Phase des Isolierkörpers (50) den Raum zwischen zwei Abwinklungen (60,61) zweier aufeinander zu gerichteten Schenkel (53,54) ausfüllt.

6. Verfahren nach einem oder mehreren der vorangehenden Ansprüche, **dadurch gekennzeichnet, dass** der Formkörper (59) bei dem Aufbringen der flüssigen Phase des Isolierkörpers (50) in einer unterseitigen Anlage an wenigstens einer Abkantung (57,58) befindlich ist.

7. Verbundprofil mit zwei durch einen Isolierkörper verbundenen Einzelprofilen, hergestellt nach dem Verfahren gemäß den Ansprüchen 1 bis 6, **dadurch gekennzeichnet, dass** der in flüssiger Phase aufgebrachte und anschließend ausgehärtete Isolierkörper (8,9) in einer Ebene mit einer Außenseite (23,24) des Verbundprofils (1) liegend und diese mit ausbilden die Einzelprofile (2,3) verbindet und dass der Isolierkörper (8,9) mit wenigstens einem Einzelprofil (2,3) durch eine Hinterschneidung auszugssicher verbunden ist.

8. Verbundprofil nach Anspruch 7, **dadurch gekennzeichnet, dass** der in flüssiger Phase aufgebrachte und anschließend ausgehärtete Isolierkörper (8,9) in einer Ebene mit wenigstens einer Außenseite (23,24) zweier Schenkel des Verbundprofils (1) liegt, diese mit ausbildend die Einzelprofile (2,3) verbindet und dass der Isolierkörper (8,9) mit wenigstens einem Einzelprofil (2,3) durch eine Hinterschneidung auszugssicher verbunden ist.

9. Verbundprofil nach einem oder mehreren der vorangehenden Ansprüche 7 bis 8, **dadurch gekennzeichnet, dass** der Isolierkörper (8,9) in einer Ebene mit den Außenseiten (23-26) zweier aufeinander zu gerichteten Schenkel (4-7) der Einzelprofile (2,3) liegend diese verbindet, dass der Isolierkörper (8,9) unterseitig der Schenkel (4-7) anhaftet und dass eine durch wenigstens ein Einzelprofil (2,3) ausgebildete Abkantung (10-13) von dem Isolierkörper (8,9) hintergriffen wird.

10. Verbundprofil nach einem oder mehreren der vorangehenden Ansprüche 8 bis 9, **dadurch gekennzeichnet, dass** ein Schenkel (33,34) Durchbrechungen (39,40) aufweist, die von dem Isolierkörper (28) durchsetzt werden.

11. Verbundprofil nach einem oder mehreren der vorangehenden Ansprüche 7 bis 10, **dadurch gekennzeichnet, dass** eine von dem Isolierkörper hintergriffenen Abkantung mit Durchbrechung oder ein Rand (15) einer Abkantung mit Ausnehmungen (14), Kerben, Einschnitten und/oder mit randseitigen Verschränkungen versehen ist.

12. Verbundprofil nach einem oder mehreren der vorangehenden Ansprüche 7 bis 11, **dadurch gekennzeichnet, dass** ein Schenkel (4-7) eine von dem Isolierkörper (8,9) hintergriffene Abkantung (10-13) aufweist.

13. Verbundprofil nach einem oder mehreren der vorangehenden Ansprüche 7 bis 12, **dadurch gekennzeichnet, dass** ein Einzelprofil (29,30) zweilagig ausgebildet ist und dass eine profilinnere Lage (41,42) eine von dem Isolierkörper (28) hintergriffene Abkantung (43,44) aufweist.

14. Verbundprofil nach einem oder mehreren der vorangehenden Ansprüche 7 bis 12, **dadurch gekennzeichnet, dass** die aufeinander zu gerichteten Schenkel (4-7) mit äußeren Abwinklungen (20,21) versehen sind und dass der Isolierkörper (8,9) sich über die gesamte Länge der aufeinander zu gerichteten Schenkel (4-7) von Abwinklung (20) zu Abwinklung (21) erstreckt.

15. Verbundprofil nach einem oder mehreren der vorangehenden Ansprüche 7 bis 13, **dadurch gekennzeichnet, dass** das Verbundprofil (1) einen Formkörper (22) aus einem Schaumkunststoff aufweist, auf dem ein Isolierkörper (8,9) aufsitzt.

## Claims

1. A method for manufacturing a composite profile, which exhibits two individual profiles joined by an insulating body that was applied in a liquid phase and subsequently cured, **characterized in that**
- two individual profiles (2, 3) are braced against a moulded body (22) in a dimensionally accurate manner;
- the liquid phase is applied against the moulded body (22) from outside the composite profile (1);
- the insulating body (8, 9), in a plane with an exterior side (23, 24) of the composite profile (1), joins the latter with the forming individual profiles (2, 3) in a cured, flush manner, wherein
- the insulating body (8, 9) is joined by way of an undercut with at least one individual profile (2, 3) so as to secure it against extraction.

2. The method according to claim 1, **characterized in that** the liquid phase is applied against a moulded body (22) that fills the profile cross section, the subsequently hardened insulating body (8, 9), lying in a plane with at least one exterior side (23, 24; 25, 26) of two legs (4, 5; 6, 7) of the individual profiles (2, 3), joins the latter together in a flush manner, the insulating body (8, 9) adheres to the bottom of the legs (4, 5; 6, 7), and a splay (10, 11; 12, 13) formed by at least one individual profile (2, 3) is engaged from the back by the insulating body (8, 9).

3. The method according to one or more of the preceding claims, **characterized in that** the moulded body (22) remains in the composite profile (1) after the insulating body (8, 9) has been cured.

4. The method according to one or more of claims 1 to 2, **characterized in that** the spatial arrangement of the individual profiles (29, 30) relative to each other leaves an opening (66) for the moulded body (45), and that the moulded body (45) introduced into the composite profile (27) is removed while or after the insulating body (28) cures.

5. The method according to one or more of the preceding claims, **characterized in that** the moulded body (59) fills out the space between two angular offsets (60, 61) of two legs (53, 54) directed toward each other while applying the liquid phase of the insulating body (50).

6. The method according to one or more of the preceding claims, **characterized in that** the moulded body (59) abuts against at least one angular offset (57, 58) from below while applying the liquid phase of the insulating body (50).

7. A composite profile with two individual profiles joined by an insulating body, manufactured based on the method according to claims 1 to 6, **characterized in that** the insulating body (8, 9) applied in the liquid phase and subsequently cured, lying in a plane with an exterior side (23, 24) of the composite profile (1), joins the latter with the forming individual profiles (2, 3), and that the insulating body (8, 9) is joined by way of an undercut with at least one individual profile (2, 3) so as to secure it against extraction.

8. The composite profile according to claim 7, **characterized in that** the insulating body (8, 9) applied in the liquid phase and subsequently cured lies in a plane with an exterior side (23, 24) of the composite profile (1), joins the latter with the forming individual profiles (2, 3), and that the insulating body (8, 9) is joined by way of an undercut with at least one individual profile (2, 3) so as to secure it against extraction.

9. The composite profile according to one or more of the preceding claims 7 to 8, **characterized in that** the insulating body (8, 9), lying in a plane with the exterior sides (23-26) of two legs (4-7) of the individual profiles (2, 3) directed toward each other, joins the latter together, the insulating body (8, 9) adheres to the bottom of the legs (4-7), and a splay (10-13) formed by at least one individual profile (2, 3) is engaged from the back by the insulating body (8, 9).

10. The composite profile according to one or more of the preceding claims 8 to 9, **characterized in that** a leg (33, 34) exhibits openings (39, 40), through which penetrates the insulating body (28).

11. The composite profile according to one or more of the preceding claims 7 to 10, **characterized in that** a splay engaged from the back by the insulating body is provided with openings, or an edge (15) of a splay is provided with recesses (14), notches, incisions and/or edge-side curls.

12. The composite profile according to one or more of the preceding claims 7 to 11, **characterized in that** a leg (4-7) exhibits a splay (10-13) engaged from the back by the insulating body (8, 9).

13. The composite profile according to one or more of the preceding claims 7 to 12, **characterized in that** a single profile (29, 30) has a two-ply design, and that a profile-internal ply (41, 42) exhibits a splay (43, 44) engaged from the back by the insulating body (28)

14. The composite profile according to one or more of the preceding claims 7 to 12, **characterized in that** the legs (4-7) directed toward each other are provided with outer angular offsets (20, 21), and that the insulating body (8, 9) extends over the entire length of the legs (4-7) directed toward each other from angular offset (20) to angular offset (21).

15. The composite profile according to one or more of the preceding claims 7 to 13, **characterized in that** the composite profile (1) exhibits a moulded body (22) comprised of a cellular plastic, upon which rests an insulating body (8, 9).

## Revendications

1. Procédé pour la fabrication d'un profilé composite, comportant deux profilés individuels reliés par un corps isolant appliqué dans une phase liquide puis durci, **caractérisé en ce que**
- deux profilés individuels (2, 3) sont serrés avec précision contre un corps de moule (22),
- une application de la phase liquide contre le corps de moule (22) est réalisée depuis l'extérieur du profilé composite (1),
- le corps isolant (8, 9) relie les profilés individuels (2, 3) durcis en affleurement et formés sur un même plan avec un côté extérieur (23, 24) du profilé composite (1), dans lequel
- le corps isolant (8, 9) est relié de manière bloquée à au moins un profilé individuel (2, 3) par une contre-dépouille.

2. Procédé selon la revendication 1, **caractérisé en ce que** l'application de la phase liquide est réalisée contre le corps de moule (22) remplissant la section transversale du profilé, **en ce que** le corps isolant (8, 9) durci par la suite relie deux branches (4, 5 ; 6, 7) des profilés individuels (2, 3), en affleurement et dans un même plan avec au moins un côté extérieur (23, 24 ; 25, 26) de ceux-ci, **en ce que** le corps isolant (8, 9) adhère au côté inférieur des branches (4, 5 ; 6, 7), et **en ce que** le corps isolant (8, 9) vient en prise derrière un rebord (10, 11 ; 12, 13) formé par au moins un profilé individuel (2, 3).

3. Procédé selon l'une ou plusieurs des revendications précédentes, **caractérisé en ce que** le corps de moule (22) demeure dans le profilé composite (1) après le durcissement du corps isolant (8, 9).

4. Procédé selon l'une ou plusieurs des revendications 1 à 2, **caractérisé en ce que** l'agencement spatial des profilés individuels (29, 30) l'un par rapport à l'autre dégage une ouverture (66) pour le corps de moule (45), et **en ce que** le corps de moule (45) introduit dans le profilé composite (27) est retiré pendant ou après le durcissement du corps isolant (28).

5. Procédé selon l'une ou plusieurs des revendications précédentes, **caractérisé en ce que** le corps de moule (59) remplit l'espace entre deux coudes (60, 61) de deux branches (53, 54) tournées l'une vers l'autre, lors de l'application de la phase liquide du corps isolant (50).

6. Procédé selon l'une ou plusieurs des revendications précédentes, **caractérisé en ce que** le corps de moule (59) est appliqué contre le côté inférieur d'au moins un rebord (57, 58) lors de l'application de la phase liquide du corps isolant (50).

7. Profilé composite avec deux profilés individuels reliés par un corps isolant, fabriqué conformément au procédé selon les revendications 1 à 6, **caractérisé en ce que** le corps isolant (8, 9) appliqué en phase liquide et durci par la suite relie les profilés individuels (2, 3) en les formant tout en se trouvant dans un même plan avec un côté inférieur (23, 24) du profilé composite (1), et **en ce que** le corps isolant (8, 9) est relié de manière bloquée à au moins un profilé individuel (2, 3) par une contre-dépouille.

8. Profilé composite selon la revendication 7, **caractérisé en ce que** le corps isolant (8, 9) appliqué en phase liquide et durci par la suite se trouve dans un même plan avec au moins un côté extérieur (23, 24) de deux branches du profilé composite (1), reliant les profilés individuels (2, 3) en les formant, et **en ce que** le corps isolant (8, 9) est relié de manière bloquée à au moins un profilé individuel (2, 3) par une contre-dépouille.

9. Profilé composite selon l'une ou plusieurs des revendications précédentes 7 à 8, **caractérisé en ce que** le corps isolant (8, 9) relie les profilés individuels (2, 3) dans un même plan avec les côtés extérieurs (23-26) de deux branches (4-7) de ceux-ci tournées l'une vers l'autre, **en ce que** le corps isolant (8, 9) adhère au côté inférieur des branches (4-7), et **en ce que** le corps isolant (8, 9) vient en prise derrière un rebord (10-13) formé par au moins un profilé individuel (2, 3).

10. Profilé composite selon l'une ou plusieurs des revendications précédentes 8 à 9, **caractérisé en ce qu'**une branche (33, 34) comporte des percées (39, 40) traversées par le corps isolant (28).

11. Profilé composite selon l'une ou plusieurs des revendications précédentes 7 à 10, **caractérisé en ce qu'**un rebord, derrière lequel s'engage le corps isolant, est pourvu d'une percée, ou un bord (15) d'un rebord est pourvu d'évidements (14), d'encoches, d'entailles et/ou d'intrications au niveau du bord.

12. Profilé composite selon l'une ou plusieurs des revendications précédentes 7 à 11, **caractérisé en ce qu'**une branche (4-7) comporte un rebord (10-13) derrière lequel s'engage le corps isolant (8, 9).

13. Profilé composite selon l'une ou plusieurs des revendications précédentes 7 à 12, **caractérisé en ce qu'**un profilé individuel (29, 30) est formé en deux couches, et **en ce qu'**une couche interne du profilé (41, 42) comporte un rebord (43, 44) derrière lequel s'engage le corps isolant (28).

14. Profilé composite selon l'une ou plusieurs des revendications précédentes 7 à 12, **caractérisé en ce que** les branches (4-7) tournées l'une vers l'autre sont pourvues de coudes extérieurs (20, 21), et **en ce que** le corps isolant (8, 9) s'étend sur l'ensemble de la longueur des branches (4-7) tournées l'une vers l'autre, d'un coude (20) à l'autre (21).

15. Profilé composite selon l'une ou plusieurs des revendications précédentes 7 à 13, **caractérisé en ce que** le profilé composite (1) comporte un corps de moule (22) constitué de mousse synthétique, sur lequel repose un corps isolant (8, 9).
